# EUROPEAN PATENT SPECIFICATION

(11) **EP 0 349 930 B1**
(45) Date of publication and mention of the grant of the patent: **09.11.1994**
(21) Application number: 89112004.0
(22) Date of filing: 30.06.1989
(51) Int. Cl.: H02H 3/04, H02H 3/00

(54) **Switch with pre-alarm means**
Schalter mit Voralarm
Interrupteur avec alarme préliminaire

(30) Priority: 07.07.1988 JP 167686/88
(43) Date of publication of application: 10.01.1990
(73) Proprietor: MITSUBISHI DENKI KABUSHIKI KAISHA, Tokyo 100 (JP)
(72) Inventor: Ishii, Kazuhiro c/o Fukuyama Seisakusho, 1-8, Midorimachi Fukayama-shi, 720 (JP); Kimura, Kenzi c/o Fukuyama Seisakusho, 1-8, Midorimachi Fukayama-shi, 720 (JP)
(74) Representative: KUHNEN, WACKER & PARTNER

(56) References cited:
- EP-A- 0 045 286
- DE-A- 3 501 353
- FR-A- 2 497 013
- FR-A- 2 564 648
- FR-A- 2 584 877

## Description

The present invention relates to a switch with pre-alarm means for alarming that an abnormal current flows on a breaker of the switch prior to an actual tripping operation of the breaker, and especially relates to a switch with pre-alarm means to be used for measuring the effective value of the current flowing on the breaker or on the load by using a pre-alarm function thereof.

For measuring the value of a current flowing on the breaker of a switch, an ammeter or a current transformer, which is clamped or disposed on the electric power lines or the breaker of the switch, has been conventionally used. In the conventional measurement, the peak value of the current has been measured generally. For measuring the effective value of the current, a circuit for measuring the effective value is necessary to be provided on tripping circuit of the switch.

As mentioned-above, since a complex apparatus or means must be used in the conventional switch for measuring the current on the breaker or the load, there is a demand for measuring the current value flowing on the load easily without using such a complex apparatus.

A switch according to the preamble of claim 1 is known from FR-A-2 564 648 which discloses a switch having a pre-alarm means. There, the current flowing on the electric lines is sensed and the sensed signal is full-wave rectified in order to form a signal representative of the current amplitude. This signal is, after calibration, applied to a tripping means having different time constants as well as to a pre-alarm means for giving an alarm before an actual tripping occurs. The calibration is effected, in FR-A-2 564 648, with regard to the current representative signal and, thus, with respect to the signal applied to the active tripping circuit. No separate level adjusting of the signal fed to the pre-alarm means is possible. Further, no level indication is provided indicating the current level at which the pre-alarm means is switched on.

EP-A-0 045 286 is directed to an electronic indicator for detecting the current flow on electric lines and generating an indication thereof as percentage of a predetermined, variable limit. When the current flow exceeds the predetermined limit, an acoustic alarm is generated. The known electronic indicator can be used in conjunction with an automatic switch. The device is intended for the monitoring of only one electric phase. The pre-alarm means of EP-A-0 045 286 comprises a comparator for comparing a current representative signal with a reference value and for generating an output signal triggering a buzzer when the reference value is exceeded.

FR-A-2 497 013 discloses a switch with pre-alarm means comprising current transformers for monitoring the currents in each of a plurality of electric power lines. Furthermore, pre-alarm judging circuit is provided which compares the signals from the monitoring means with a predetermined level for alarming that an abnormal current above said predetermined level flows in one of said plural electric power lines. This pre-alarm judging circuit includes a rectifier for rectifying the signals from the monitoring means and a comparator which receives the output signal of the rectifier.

An object of the present invention is to provide an improved switch with pre-alarm means for measuring the maximum value of the currents flowing in a plurality of electric lines with respect to the rated current value of a breaker of the switch by using a pre-alarm function included in the switch.

The invention provides a switch with pre-alarm means in accordance with claim 1.

When a user operates the level adjusting means for reducing the level of the pre-alarm means gradually from the rated value of the current and monitors the indication of the pre-alarm indicator means, the pre-alarm indicator means will issue an alarm by, for example, lighting of an alarm lamp, when the predetermined level reaches a certain relationship with respect to the flowing current. The indication by the level indicator means corresponds to the value of the current flowing through the load at that time. Thereby, the value of the current flowing through the load can easily be measured.

FIG.1 is a perspective view showing a preferred embodiment of a switch with pre-alarm means in accordance with the present invention.

FIG.2 is a drawing showing time-current characteristics of pre-alarm and over-current tripping operations of the switch with pre-alarm means in accordance with the present invention.

FIG.3 is a circuit diagram of the switch with pre-alarm means in accordance with the present invention.

FIG.4 is a circuit diagram showing details of the pre-alarm circuit 20 shown in FIG.3.

FIG.5 is a circuit diagram showing details of a pre-alarm output circuit 21 shown in FIG.3.

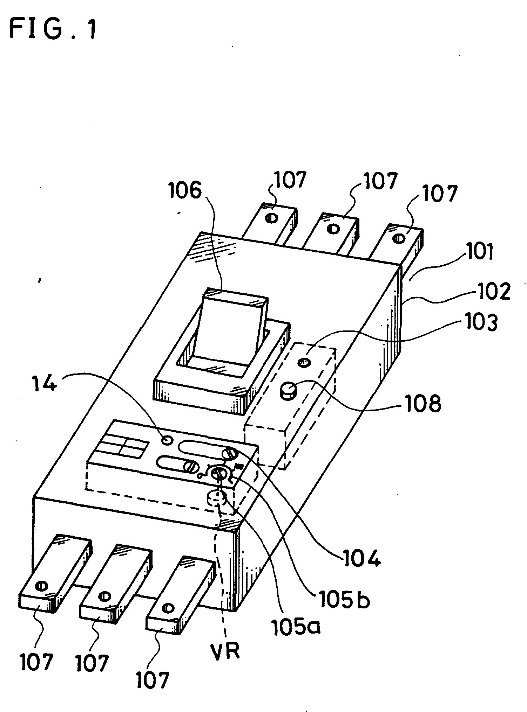

A preferred embodiment of a switch with pre-alarm means in accordance with the present invention is described referring to FIGs. 1, 2, 3, 4 and 5.

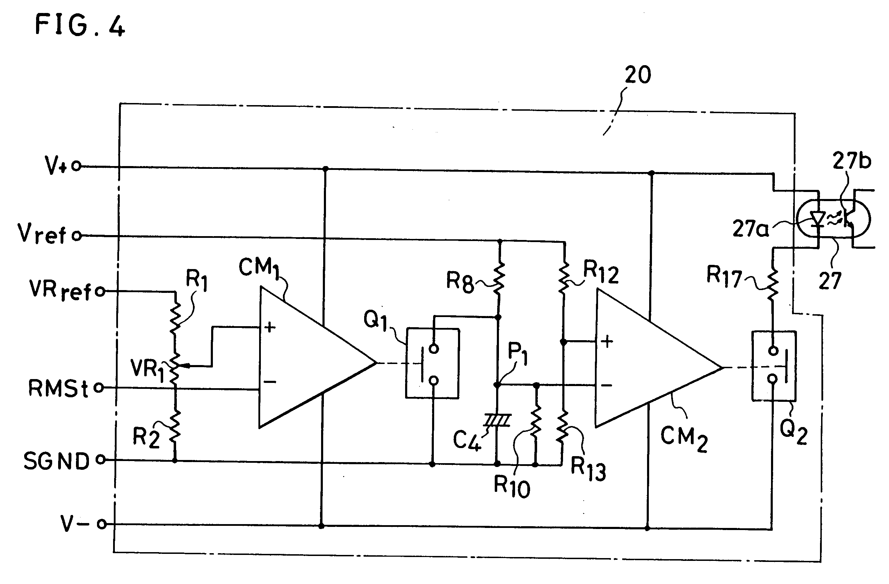

FIG.1 is a perspective view showing a switch with pre-alarm means in accordance with the present invention. In FIG.1, the switch 101 comprises a breaker and a pre-alarm apparatus in a housing 102. An operation indicator 103 which is, for example, a light emitting diode (LED) is provided on the outer face of the housing 102, so that an operator can easily monitor the operation indicator 103. A reset switch 108 is also provided on the outer face of the housing 102. A lug 104 is for changing rated value of current of the switch 101, and a lug 105a is for adjusting the level of the pre-alarm of the switch. The lug 105a is rotatable and co-axially connected to a variable resistor such as VR₁ shown in FIG. 4, and thereby the level of the pre-alarm for lighting the operation indicator 103 is serially adjusted in a predetermined range for example 70--100% of the rated value of the current of the switch 101. A level indicator 105b such as a scale for current (A) is provided around the lug 105a so that the level of the pre-alarm can be confirmed.

Furthermore, numeral 106 designates an operation lever of the breaker installed in the housing 102 for making and breaking contacts thereof; and numerals 107, 107... designate terminals of the switch 101 to be connected to electric power lines and loads.

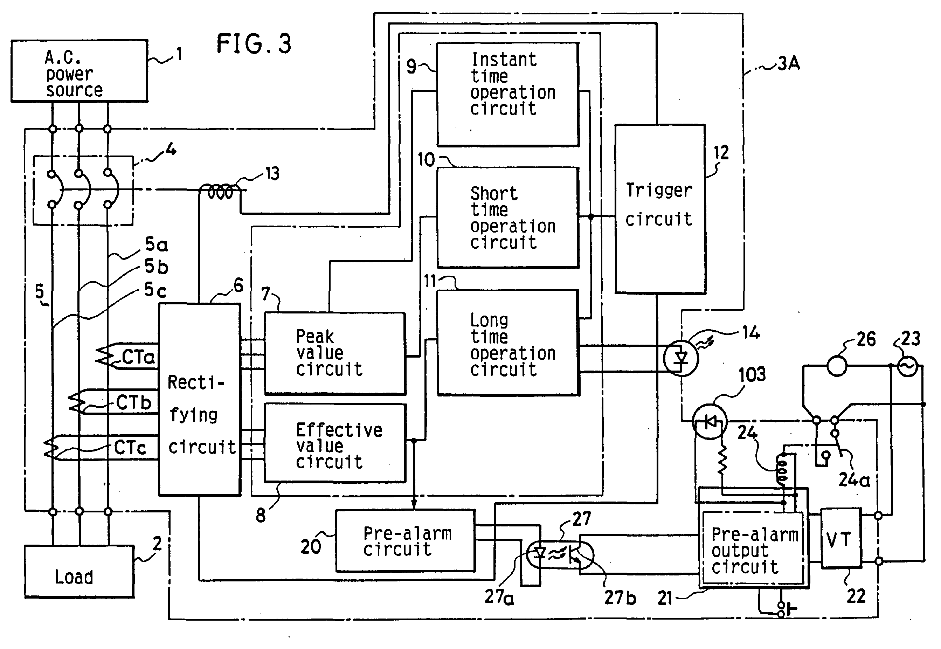

FIG.3 is a circuit diagram of the switch with pre-alarm means in accordance with the present invention. In FIG.3, current transformers CTa, CTb and CTc are disposed on three phases of A.C. power lines 5a, 5b and 5c, respectively. Outputs of secondary windings of the current transformers CTa, CTb and CTc are inputted to a rectifying circuit 6. Outputs of the rectifying circuit 6 is inputted to a peak value circuit 7 and an effective value circuit 8. The peak value circuit 7 selects an output from the rectifying circuit 6 corresponding to an output of the current transformers CTa, CTb and CTc including the maximum value and converts the output to a peak value. The effective value circuit 8 also selects an output from the rectifying circuit 6 including the maximum value and converts the output to an effective value. Output of the peak value circuit 7 is inputted to an instant time operation circuit 9 and a short time operation circuit 10. Output of the effective value circuit 8 is inputted to a long time operation circuit 11 and a pre-alarm circuit 20.

The instant time operation circuit 9, the short time operation circuit 10 and the long time operation circuit 11 are connected to a trigger circuit 12, respectively. The trigger circuit 12 is connected to a tripping coil 13 and the rectifying circuit 6. The other terminal of the tripping coil 13 is also connected to the rectifying circuit 6. A light emitting diode (LED) 14 for indicating occurrence of over-current is connected to the long time operation circuit 11. The pre-alarm circuit 20 is connected to a pre-alarm output circuit 21 via photo-coupler 27. A light emitting diode (LED) 103 for pre-alarming and a relay coil 24 for pre-alarming are connected to the pre-alarm output circuit 21. An electric power source 23 for controlling the switch 101 is connected to the pre-alarm output circuit 21 via a voltage dropping element 22 such as a voltage transformer (VT). An alarm buzzer 26 is connected to the power source 23 via switch 24a. The switch 24a is opened and closed by operation of the relay coil 24 for pre-alarming so that the alarm buzzer 26 can be controlled.

FIG.4 is a circuit diagram for showing details of the pre-alarm circuit 20 in FIG.3. In FIG.4, terminals designated by V+,V- and SGND are respectively connected to an electric power source of an over-current tripping circuit which is not shown in the drawings. V_{ref} is a reference voltage, which is kept, for example, at 4V. Voltage at a terminal designated by VR_{ref} is changeable due to the rated value of the current and set at, for example, 4V when the rated value is 400A and set at 2V when the rated value is 200A. The Non-inverted terminal of a first comparator CM₁ is connected to a variable resistor VR₁ and the voltage thereof is changed by the setting of the variable resistor VR₁. The variable resistor VR₁ is used for setting the pre-alarm level of the value of the current, and is co-axially provided on the lug 105a shown in FIG.1.

A D.C. signal which is in proportion to the effective value of the current flowing on a main circuit, for example, electric power line 5a, 5b or 5c, is applied to a terminal designated by RMST. Namely, the signal on the terminal designated by RMST is the output of the effective value circuit 8. When the level of the D.C. signal on the terminal of RMST is above the reference voltage V_{ref} of the first comparator CM₁, a switch Q₁ is turned off from its on state. The Non-inverted terminal of a second comparator CM₂ is supplied with a reference voltage divided by resistors R₁₂ and R₁₃. The Inverted terminal of the second comparator CM₂ is connected to a point P₁ which is a connecting point of resistors R₈ and R₁₀ connected between V_{ref} and SGND in series. A capacitor C₄ is connected to the resistor R₁₀ in parallel.

At first, since the switch Q₁ is turned to on state, input of the inverted terminal of the second comparator CM₂ is "0". When the switch Q₁ turns off, the resistor R₈ and the capacitor C₄ start to effect a timing operation and the voltage of the capacitor C₄ is gradually raised. When the voltage of the capacitor C₄ reaches the the reference voltage of the second comparator CM₂, a switch Q₂ connected to the second comparator CM₂ turns on and a current begins to flow on the photo-coupler 27 via resistor R₁₇. As a result, a signal is output to the pre-alarm output circuit 21.

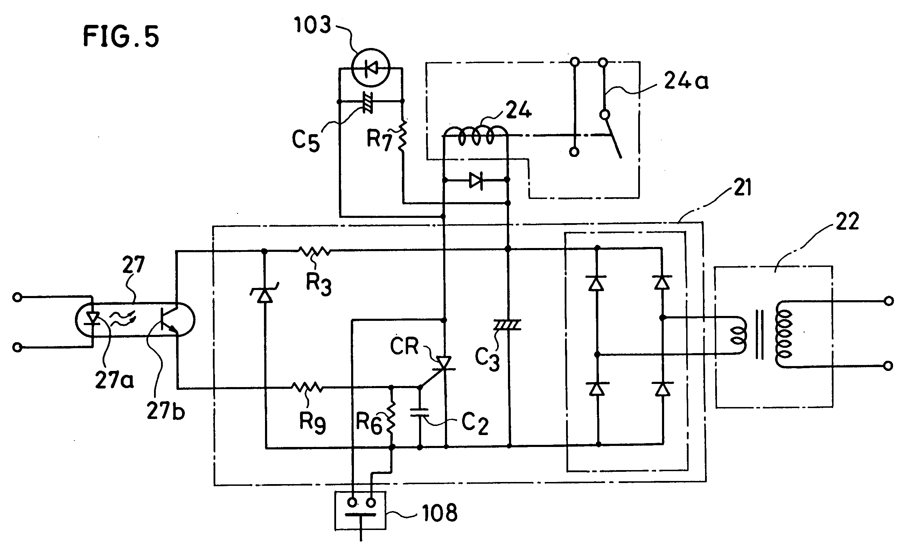

FIG.5 is a circuit diagram showing details of the pre-alarm output circuit 21. In FIG.5, when LED 27a is lighted by an output signal from the pre-alarm circuit 20, photo-transistor 27b of the photo-coupler 27 turns on. When the photo-transistor 27b turns on, current flows to gate of thyristor CR via resistor R₃, transistor 27b and resistor R₉. When the thyristor CR turns on, current flows on the relay coil 24 and switch 24a is turned on by electro-magnetic force of the relay coil 24. Since the alarm buzzer 26 is connected in series to the switch 24a as shown in FIG.3, when the normal open switch 24a is turned on the alarm buzzer 26 is driven. At the same time, the operation indicator (LED) 103 for pre-alarming is lighted. A smoothing capacitor C₃ of FIG.5 is for smoothing full-wave rectified current and a capacitor C₅ is for preventing erroneous lighting of the operation indicator (LED) 103 due to large overcurrent of the main circuit.

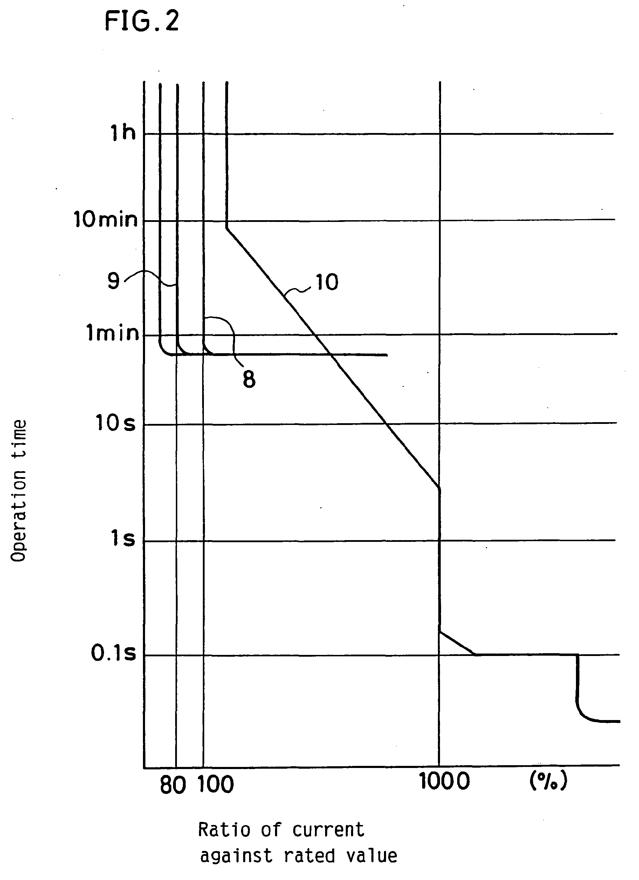

In the above-mentioned embodiment, for measuring the value of the current flowing on the main circuit (or the breaker disposed on the main power line), the lug 105a for adjusting the level of the pre-alarm of the switch 101 is to be turned when monitoring the operation indicator (LED) 103. In FIG.2, for example, the level of the pre-alarm is gradually reduced from the rated value of current designated by numeral 8. When the operation indicator (LED) 103 is lighted at a position on the line 9, the value on the line 9 shows the value of the current flowing on the load. In this embodiment, the line 9 shows a ratio of 80% of the current rated value of the current shown by line 8. When the rated value of the current is 150A, the actual value of the current flowing on the load is 120A. In FIG.2, line 10 shows the characteristics of the over-current tripping of the breaker.

## Claims

1. A switch with pre-alarm means (20, 21) comprising:
a breaker (11 - 13) for tripping contacts (4) when the current in any one of a plurality of electric power lines (5a, 5b, 5c) exceeds a rated current value,
pre-alarm means (20, 21) for alarming that a current which is above a predetermined level flows in one of said plurality of electric power lines (5a, 5b, 5c) prior to tripping of said breaker,
pre-alarm indicator means (103) for indicating operation of said pre-alarm means (20, 21), said pre-alarm indicator means being provided on an outer face of a housing (102) of said switch,
said pre-alarm means (20, 21) comprising a pre-alarm judging circuit (20) for comparing the value of the current flowing in one of said electric power lines (5a, 5b, 5c) with said predetermined level and outputting a signal when said current value is above said predetermined level, as well as a pre-alarm output circuit (21) for driving said pre-alarm indicator means (103) upon receipt of said signal,
characterized in that
said pre-alarm judging circuit (20) compares the maximum value of the currents flowing in said plurality of electric power lines (5a, 5b, 5c) with said predetermined level,
a level adjusting means (VR1, 105a, 105b) for manually adjusting said predetermined level within a range below said rated current value is provided, said level adjusting means comprising a level indicator (105b) provided on the outer face of said housing (102) and deriving said predetermined level from a voltage (VRref) dependent on said rated current value.

2. A switch according to claim 1 comprising:
current transforming means (CTa, CTb, CTc) provided on said electric power lines (5a, 5b, 5c) for outputting electric currents corresponding to the values of current flowing in said electric power lines;
at least one maximum value detecting means (8) for detecting the maximum value of said electric currents of said current transforming means (CTa, CTb, CTc) and outputting said maximum value;
wherein the pre-alarm judging circuit (20) compares said maximum value with the predetermined level.

## Patentansprüche

1. Schalter mit Vorwarneinrichtung (20, 21), mit:
einem Unterbrecher (11 bis 13) zum Trennen von Kontakten (4), wenn der Strom in irgendeiner aus einer Mehrzahl von elektrischen Stromleitungen (5a, 5b, 5c) einen Nennstromwert überschreitet,
einer Vorwarneinrichtung (20, 21) zur Alarmgabe, daß ein oberhalb eines vorbestimmten Pegels liegender Strom in einer aus der Mehrzahl von elektrischen Stromleitungen (5a, 5b, 5c) fließt, vor dem Auslösen des Unterbrechers,
einer Vorwarn-Anzeigeeinrichtung (103) zum Anzeigen der Betätigung der Vorwarneinrichtung (20, 21), wobei die Vorwarn-Anzeigeeinrichtung an einer äußeren Fläche eines Gehäuses (102) des Schalters vorgesehen ist,
wobei die Vorwarneinrichtung (20, 21) eine Vorwarn-Beurteilungsschaltung (20) zum Vergleichen des Werts des in einer der elektrischen Stromleitungen (5a, 5b, 5c) fließenden Stroms mit dem vorbestimmten Pegel und zum Abgeben eines Signals, wenn der Stromwert oberhalb des vorbestimmten Pegels liegt, sowie eine Vorwarn-Abgabeschaltung (21) zum Ansteuern der Vorwarn-Anzeigeeinrichtung (103) bei Empfang des Signals umfaßt,
dadurch gekennzeichnet, daß
die Vorwarn-Beurteilungsschaltung (20) den maximalen Wert der in der Mehrzahl von elektrischen Stromleitungen (5a, 5b, 5c) fließenden Ströme mit dem vorbestimmten Pegel vergleicht,
daß eine Pegeleinstelleinrichtung (VR1, 105a, 105b) zum manuellen Einstellen des vorbestimmten Pegels innerhalb eines Bereichs unterhalb des Nennstromwerts vorgesehen ist, wobei die Pegeleinstelleinrichtung einen Pegelanzeiger (105b) aufweist, der an der äußeren Fläche des Gehäuses (102) vorgesehen ist, und den vorbestimmten Pegel aus einer Spannung (VRref) gewinnt, die von dem Nennstromwert abhängt.

2. Schalter nach Anspruch 1, mit:
einer Stromtransformatoreinrichtung (CTa, CTb, CTc), die an den elektrischen Stromleitungen (5a, 5b, 5c) zum Abgeben elektrischer Ströme, die den Werten der in den elektrischen Stromleitungen fließenden Strömen entsprechen, vorgesehen ist,
zumindest einer Maximalwert-Erfassungseinrichtung (8) zum Erfassen des maximalen Werts der elektrischen Ströme der Stromtransformatoreinrichtung (CTa, CTb, CTc) und zum Abgeben des maximalen Werts,
wobei die Vorwarn-Beurteilungsschaltung (20) den maximalen Wert mit dem vorbestimmten Pegel vergleicht.

## Revendications

1. Interrupteur à alarme préliminaire (20, 21) comprenant :
un disjoncteur (11-13) pour déclencher des contacts (4) lorsque le courant dans l'une quelconque d'une pluralité de lignes d'alimentation électrique (5a, 5b, 5c) excède une valeur de courant nominale,
un moyen d'alarme préliminaire (20, 21) pour signaler qu'un courant qui est au-dessus d'un niveau prédéterminé circule dans l'une de la pluralité des lignes d'alimentation électrique (5a, 5b, 5c) avant de déclencher le disjoncteur,
un moyen indicateur d'alarme préliminaire (103) pour indiquer le fonctionnement du moyen d'alarme préliminaire (20, 21), ledit moyen indicateur d'alarme préliminaire étant prévu sur une face externe d'un boîtier (102) de l'interrupteur,
le moyen d'alarme préliminaire (20, 21) comprenant un circuit de jugement d'alarme préliminaire (20) pour comparer la valeur du courant circulant dans l'une des lignes d'alimentation électrique (5a, 5b, 5c) au niveau prédéterminé et produire un signal lorsque la valeur de courant est au-dessus du niveau prédéterminé, ainsi qu'un circuit de production d'alarme préliminaire (21) pour commander le moyen indicateur d'alarme préliminaire (103) lors de la réception dudit signal,
caractérisé en ce que
le circuit de jugement d'alarme préliminaire (20) compare la valeur maximum des courants circulant dans la pluralité de lignes d'alimentation électrique (5a, 5b, 5c) au niveau prédéterminé,
un moyen de réglage de niveau (VR1, 105a, 105b) pour manuellement régler le niveau prédéterminé dans une gamme en dessous de la valeur de courant nominal est prévu, ledit moyen de réglage de niveau comprenant un indicateur de niveau (105b) prévu sur la face externe du boîtier (102) et dérivant le niveau prédéterminé d'une tension (VRref) suivant la valeur du courant nominale.

2. Interrupteur selon la revendication 1, comprenant :
un moyen de transformation de courant (CTa, CTb, CTc) prévu sur les lignes d'alimentation électrique précitées (5a, 5b, 5c) pour produire des courants électriques correspondant aux valeurs de courant circulant dans la ligne d'alimentation électrique;
au moins un moyen de détection de valeur maximum (8) pour détecter la valeur maximum des courants électriques des moyens de transformation de courant (CTa, CTb, CTc) et produire la valeur maximum;
dans lequel le circuit de jugement d'alarme préliminaire (20) compare la valeur maximum au niveau prédéterminé.
